# EUROPÄISCHE PATENTSCHRIFT

(11) **EP 0 535 551 B1**
(45) Veröffentlichungstag und Bekanntmachung des Hinweises auf die Patenterteilung: **08.11.1995**
(21) Anmeldenummer: 92116448.9
(22) Anmeldetag: 25.09.1992
(51) Int. Cl.: B60R 22/405

(54) **Selbstsperrender Gurtaufroller mit Retractor-Umschaltung**
Self locking seat belt retractor with switching retractor
Enrouleur à blocage automatique pour ceinture de sécurité avec communication de rétracteur

(30) Priorität: 03.10.1991 DE 4132876
(43) Veröffentlichungstag der Anmeldung: 07.04.1993
(73) Patentinhaber: AUTOLIV DEVELOPMENT AB, S-44783 Vargarda (SE)
(72) Erfinder: Jabusch, Ronald, Dipl.-Ing., W-2200 Elmshorn (DE)
(74) Vertreter: Müller, Karl-Ernst, Dr., Dipl.-Ing.

(56) Entgegenhaltungen:
- DE-A- 3 036 412
- US-A- 4 915 321
- PATENT ABSTRACTS OF JAPAN vol. 14, no. 305 (M-992)(4248) 29. Juni 1990 & JP-A-02 099 443 (HONDA MOTOR CO LTD) 11. April 1990

## Beschreibung

Die Erfindung betrifft einen Gurtaufroller, insbesondere für Kraftfahrzeuge, mit einem fahrzeugsensitiven und/oder gurtbandsensitiven Steuersystem für das Sperrglied, welches im Blockierfall die weitere Drehung der Gurtaufwickelwelle verhindert, und mit einer auf die Gurtaufwickelwelle einwirkenden Aufwickelfeder, wobei eine Steuervorrichtung einen Schalthebel bei abgewickeltem Gurtband in die Außenverzahnung einer Steuerscheibe des gurtband- und/oder fahrzeugsensitiven Steuersystems des Gurtaufrollers einschwenkt und bei aufgewickeltem Gurtband in eine Freigabestellung für die Steuerscheibe bringt, wobei die Steuervorrichtung ein mit einem Steuer-Nocken versehenes Zahnrad aufweist, das mit einem wellenfesten Zahnrad kämmt und eine am Gehäuse des Gurtaufrollers gelagerte Wippe zur Steuerung des Schalthebels betätigt.

Ein Gurtaufroller mit den vorgenannten Merkmalen ist in der DE 38 09 007 C2 beschrieben; zur Ansteuerung eines entsprechenden Sperrhebels ist ein zweiarmiger, um eine Achse schwenkbar gelagerter Aktivierungshebel vorgesehen, der von einem Planetenzahnradgetriebe gesteuert wird, welches auf zwei in entsprechenden gehäusefesten Führungen verschiebbare Zapfen wirkt. Das Planetenzahnradgetriebe selbst besteht aus einem auf der Welle des Gurtaufrollers angeordneten Sonnenrad sowie einem zugeordneten Hohlrad, mit welchen vorgenannten Rädern ein Planetenzahnrad kämmt, welches sich bei Wickelbewegungen der Welle sowohl um seine eigene Achse dreht als auch bei Drehung des Sonnenrades entsprechend der Wellenbewegung um das Sonnenrad kreist. Das Planetenzahnrad weist einen gegenüber seiner Verzahnung axial versetzten Vorsprung auf, mit welchem es auf die verschiebbaren Zapfen zur Betätigung des Aktivierungshebels wirkt.

Mit dem bekannten Gurtaufroller ist der Nachteil verbunden, daß der Aufbau der daraus bekannten Steuerung für die Umschaltung des Gurtaufrollers mit der Anordnung des Aktivierungshebels und der Zuordnung des aufwendigen Planetenzahnradgetriebes aus zahlreichen Bauteilen besteht und daher aufwendig in Fertigung und Montage ist, weil die einzelnen Teile außerordentlich paßgenau zusammenwirken müssen, um eine sichere Funktion des Gurtaufrollers zu gewährleisten.

Der Erfindung liegt daher die Aufgabe zugrunde, bei einem gattungsgemäßen Gurtaufroller die diesbezügliche Steuervorrichtung zu vereinfachen.

Die Lösung dieser Aufgabe ergibt sich aus dem Hauptanspruch; vorteilhafte Ausgestaltungen und Weiterbildungen sind in den Unteransprüchen angegeben.

Die Erfindung sieht vor, daß die Wippe schwenkbar um die Wellenachse angeordnet ist und an ihren beiden Enden jeweils ein mit dem wellenfesten Zahnrad kämmendes Zahnrad angeordnet ist, wobei das wellenfeste Zahnrad und die an der Wippe angeordneten Zahnräder jeweils einen Schaltnoppen aufweisen, welche bei vorgegebenen Abwickel-Zuständen in gegenseitigen Anschlag gelangen und eine Verschwenkung der Wippe einleiten. Mit diesem Vorschlag ist der Vorteil verbunden, daß in einfacher Weise die als ein Indikator für die Festlegung des Schaltzeitpunktes für das Zu- beziehungsweise Abschalten der Blockiermechanik des Gurtaufrollers dienende, von der Gurtaufwickelwelle vollzogene Umdrehungszahl jeweils unmittelbar der Umsetzung in die Ansteuerung des Schalthebels dient, indem bei Erreichen einer festgelegten Umdrehungszahl die zugeordneten Schaltnoppen der beiden von der Wippe getragenen Zahnräder einerseits und des wellenfesten Zahnrades andererseits erst bei Erreichen einer festgelegten Umdrehungszahl in der einen wie in der anderen Drehrichtung der Gurtaufwickelwelle in gegenseitigen Anschlag gelangen, so daß die Wippe zur Betätigung des Schalthebels entsprechend bewegt und somit ein zugeordnetes Bauteil in die Außenverzahnung der Steuerscheibe eingesteuert wird.

Nach einem Ausführungsbeispiel der Erfindung sind die zugeordneten Schaltnoppen außerhalb der Verzahnungsebene der Zahnräder als Träger der Schaltnoppen angeordnet, so daß auch noch ein Weiterdrehen der Gurtaufwickelwelle beziehungsweise der zugeordneten Zahnräder nach Erreichen des Anschlages der Schaltnoppen möglich ist, indem sich dann die Schaltnoppen nach vollzogener Verschwenkung der Wippe und dem damit sichergestellten Schaltvorgang aneinander vorbei drehen können; hierzu ist ein ähnlicher Vorschlag bereits aus der DE 30 36 412 A1 bekannt.

Nach einem Ausführungsbeispiel der Erfindung weist der Eingriff des wellenfesten Zahnrandes mit den an der Wippe angeordneten Zahnrädern so viel Spiel auf, daß die Zahnüberdeckung die Bewegung der außerhalb der Wellenachse gelagerten Wippe zuläßt.

Grundsätzlich kann der an der Wippe angeordnete Schalthebel unmittelbar mit der Außenverzahnung der Steuerscheibe zusammenwirken; nach einem Ausführungsbeispiel der Erfindung ist aber auch vorgesehen, an dem Gehäuse des Gurtaufrollers einen zusätzlichen Sperrarm anzuordnen, der von dem Schalthebel der Wippe zwischen seiner Eingriffslage in die Außenverzahnung der Steuerscheibe und einer Freigabstellung gesteuert wird. Ein solcher zusätzlicher und von dem Schalthebel beaufschlagter Sperrarm ist ebenfalls aus der gattungsbildenden DE 38 09 007 C2 bekannt.

Zweckmäßig ist der Sperrarm als Federarm ausgebildet, welcher ständig in Eingriff mit der Außenverzahnung der Steuerscheibe zu stehen bestrebt ist und der bei Abschaltung des Blockiersystems von dem Schalthebel der Wippe außer Eingriff mit der Außenverzahnung der Steuerscheibe gehalten wird.

In der Zeichnung ist ein Ausführungsbeispiel der Erfindung wiedergegeben, welches nachstehend beschrieben ist. Es zeigen:
- Fig. 1: eine schematische Darstellung der wesentlichen Funktionsteile für die Zuschaltung des Blockiersystems, kurz vor dem Zeitpunkt des Zuschaltens,
- Fig. 2: den Gegenstand der Figur 1 bei zugeschaltetem Blockiersystem, kurz vor dem Zeitpunkt der Abschaltung.

Die Figuren zeigen eine Seitenansicht auf einen Gurtaufroller 10, und zwar auf dessen einen Seitenschenkel 11 des U-förmig ausgestalteten Rahmens, in welchem eine im einzelnen nicht dargestellte Gurtaufwickelwelle mit darauf aufgewickeltem Gurtband 12 drehbar gelagert ist; wie im einzelnen nicht weiter dargestellt, befindet sich an einem Schenkel des Gurtaufrollers 10 unter einer Abdeckkappe eine Aufwickelfeder, während an dem anderen Schenkel des U-Rahmens, unter einer Abdeckung verborgen, das Blockiersystem mit dem gurtbandsensitiven und dem fahrzeugsensitiven Steuersystem angebracht ist. Von diesem Steuersystem ist in einem Ausschnitt die Steuerscheibe 13 mit einer Außenverzahnung 14 sichtbar, die auf der Gurtaufwickelwelle gelagert ist und mit einem ebenfalls auf der Welle radial auslenkbar angeordneten Sperrglied derart gekoppelt ist, daß bei stillstehender Steuerscheibe 13 und sich drehender Gurtaufwickelwelle eine Auslenkung des Sperrgliedes in dessen Blockierlage und damit die Blockierung der Gurtaufwickelwelle erfolgt. Ein derartiges Blockiersystem ist dem Grundsatz nach in dem DE-GM 74 25 231 beschrieben.

Die Gurtaufwickelwelle hat einen vierkantartigen Fortsatz 15, auf dem formschlüssig ein Zahnrad 16 gelagert ist, so daß eine wellenfeste Verbindung des Zahnrades 16 mit der Gurtaufwickelwelle gegeben ist. An dem Schenkel 11 des Gurtaufrollers ist eine Wippe 17 mit jeweils an deren äußeren Enden drehbar angeordneten Zahnrädern 18, 19 derart schwenkbar angeordnet, daß die Zahnräder 18, 19 ständig mit dem wellenfesten Zahnrad 16 kämmen; dabei ist der Zahneingriff zwischen den Zahnrädern 16, 18, 19 so festgelegt, daß eine Bewegung der Wippe 17 bei ständigem Zahneingriff der Zahnräder möglich ist.

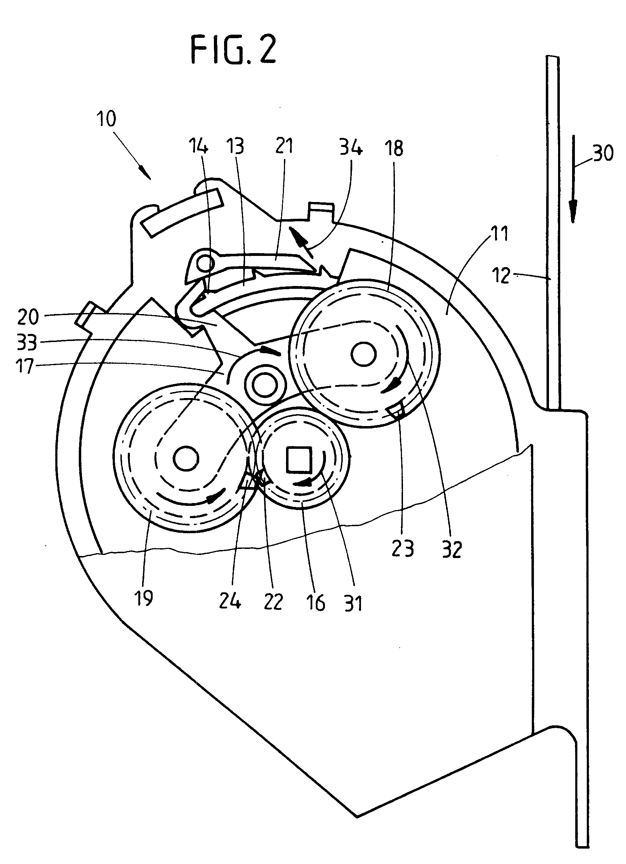

An der Wippe 17 steht radial ein Schaltarm 20 ab, dessen äußeres Ende bei der Schwenkbewegung der Wippe 17 eine kreisbogenförmige Bewegung vollzieht. An dem Schenkel 11 des Gurtaufrollers 10 ist ein Federarm 21 (Sperrarm) gelagert, der aufgrund seiner Federwirkung bestrebt ist, in Eingriff mit der Außenverzahnung 14 der Steuerscheibe 13 zu stehen, wie dies in der Figur 2 dargestellt ist; der Federarm 21 wird von dem Schalthebel 20 der Wippe 17 derart beaufschlagt, daß bei dem Normalbetrieb des Gurtaufrollers der Federarm 21 durch den Schalthebel 20 aus seinem Eingriff mit der Außenverzahnung 14 der Steuerscheibe 13 herausgehalten ist.

Die miteinander kämmenden Zahnräder 16, 18, 19 weisen außerhalb ihrer Verzahnungsebene jeweils einen Schaltnoppen auf, wobei dem Zahnrad 16 ein Schaltnoppen 22, dem Zahnrad 18 ein Schaltnoppen 23 und dem Zahnrad 19 ein Schaltnoppen 24 zugeordnet ist.

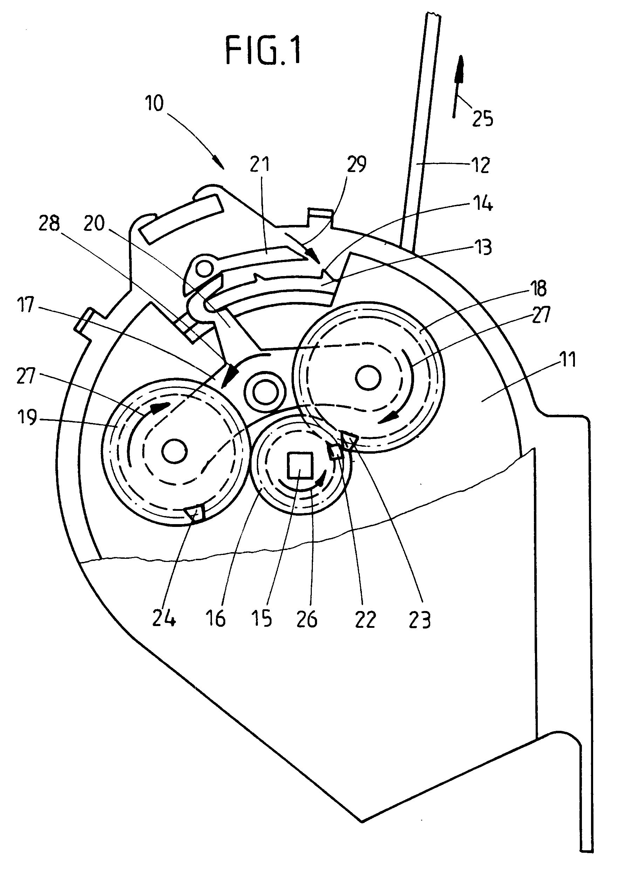

Ausgehend von dem in Figur 1 dargestellten Zustand wird nachfolgend die Funktion der Steuervorrichtung für die Zu- und Abschaltung des Blockiersystems beschrieben.

Bei der aus Figur 1 ersichtlichen Funktionsstellung arbeitet der selbstsperrende Gurtaufroller als Gurtaufroller mit einer fahrzeugsensitiven und gurtbandsensitiven Ansteuerung seines Blockiersystems über die Ansteuerung der Steuerscheibe, wie dies in dem DE-GM 74 25 231 beschrieben ist. Wird nun beispielsweise zur Halterung eines Kindersitzes das Gurtband 12 in Richtung des Pfeiles 25 sehr weit von dem Gurtaufroller abgezogen, so dreht sich das wellenfeste Zahnrad 16 in Drehrichtung des Pfeiles 26 mit, wobei eine lastfreie Beaufschlagung der Zahnräder 18, 19 mit deren Drehrichtung (Pfeil 27) erfolgt. Während der damit verbundenen Drehung der Zahnräder 16, 18, 19 kommen die zugeordneten Schaltnoppen 22, 23, 24 nicht in Berührung, vielmehr drehen sich diese aneinander vorbei.

Erst bei Erreichen einer vorbestimmten Umdrehungszahl des Zahnrades 16, welche einem gewünschten Abwickelzustand des Gurtbandes 12 entspricht, schlagen die Schaltnoppen 22, 23 der Zahnräder 16, 18 in dieser einen Stellung aneinander an, wodurch bei einer weiteren Belastung des Zahnrades 16 in Drehrichtung 26 die Wippe 17 in Richtung des Pfeiles 28 verschwenkt wird. Durch diese Verschwenkung kommt der Schalthebel 20 außer Eingriff mit dem Federarm 21, so daß aufgrund seiner Federwirkung der Federarm 21 in Richtung des Pfeils 29 nun in die Außenverzahnung 14 der Steuerscheibe 13 einschwenkt.

In dieser, aus Figur 2 ersichtlichen Stellung ist die Steuerscheibe 13 gegen eine Drehung der Gurtaufwickelwelle in Gurtauszugsrichtung 25 gesperrt, während sie sich in Aufwickelrichtung (Pfeil 30 in Figur 2) mit der Gurtaufwickelwelle drehen kann. Damit kann bei der aus Figur 2 ersichtlichen Schaltlage das Gurtband 12 in den Gurtaufroller eingezogen werden, während schon ein leichter Auszug des Gurtbandes in der in Figur 2 dargestellten Zuschaltstellung zu einer Blockierung dieser Auszugsbewegung führt.

Soll nun die ständige Zuschaltung des Blockiersystems bei einem anschließenden Einzug des Gurtbandes wieder aufgehoben werden, so kommt das Zahnrad 16 bei seiner Drehung in Richtung des Pfeils 31 mit seinem Schaltnoppen 23 nach der gewünschten Umdrehungszahl in Anschlag mit dem Schaltnoppen 24 des Zahnrades 19, welches sich bei Aufwickelbewegung des Gurtbandes (Pfeil 30) in Richtung des Pfeils 32 dreht. In dieser Stellung führt eine weitere Drehbeaufschlagung des Zahnrades 16 zu einer Verschwenkung der Wippe 17 in Richtung des Pfeils 33, und dadurch gelangt der Schalthebel 20 unter den Federarm 21 und hebt diesen in Richtung des Pfeils 34 aus der Außenverzahnung 14 der Steuerscheibe 13 heraus; nach Abschluß dieser Bewegung entspricht der Schaltzustand der in Figur 1 gegebenen Darstellung, bei welcher eine normale Funktion des fahrzeug- und des gurtbandsensitiven Steuersystems des Gurtaufrollers gewährleistet ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller, insbesondere für Kraftfahrzeuge, mit einem fahrzeugsensitiven und/oder gurtbandsensitiven Steuersystem für das Sperrglied, welches im Blockierfall die weitere Drehung der Gurtaufwickelwelle verhindert, und mit einer auf die Gurtaufwickelwelle einwirkenden Aufwickelfeder, wobei eine Steuervorrichtung einen Schalthebel (20) bei abgewickeltem Gurtband (12) in die Außenverzahnung einer Steuerscheibe (13) des gurtband- und/oder fahrzeugsensitiven Steuersystems des Gurtaufrollers einschwenkt und bei aufgewickeltem Gurtband (12) in eine Freigabestellung für die Steuerscheibe (13) bringt, wobei die Steuervorrichtung ein mit einem Steuer-Nocken (23) versehenes Zahnrad (18) aufweist, das mit einem wellenfesten Zahnrad (16) kämmt und eine am Gehäuse (11) des Gurtaufrollers gelagerte Wippe (17) zur Steuerung des Schalthebels (20) betätigt, dadurch gekennzeichnet, daß die Wippe (17) schwenkbar um die Wellenachse angeordnet ist und an ihren beiden Enden jeweils ein mit dem wellenfesten Zahnrad (16) kämmendes Zahnrad (18, 19) angeordnet ist, wobei das wellenfeste Zahnrad (16) und die an der Wippe (17) angeordneten Zahnräder (18, 19) jeweils einen Schaltnoppen (22, 23, 24) aufweisen, welche bei vorgegebenen Abwickel-Zuständen in gegenseitigen Anschlag gelangen und durch Gurtzug beziehungsweise Federzug eine Verschwenkung der Wippe (17) einleiten.

2. Gurtaufroller nach Anspruch 1, dadurch gekennzeichnet, daß die Schaltnoppen (22, 23, 24) der Zahnräder (16, 18, 19) außerhalb deren Verzahnungsebene angeordnet sind.

3. Gurtaufroller nach Anspruch 1 oder 2, dadurch gekennzeichnet, daß der Eingriff des wellenfesten Zahnrades (16) mit den an der Wippe (17) angeordneten Zahnrädern (18, 19) so viel Spiel aufweist, daß die Zahnüberdeckung die Bewegung der außerhalb der Wellenachse gelagerten Wippe (17) zuläßt.

4. Gurtaufroller nach einem der Ansprüche 1 bis 3, dadurch gekennzeichnet, daß ein gesonderter, von dem Schalthebel (20) beaufschlagter Sperrarm (21) zum Eingriff in die Außenverzahnung (14) der Steuerscheibe (13) vorgesehen ist.

5. Gurtaufroller nach Anspruch 4, dadurch gekennzeichnet, daß der Sperrarm als in dessen Eingriffsstellung belasteter Federarm (21) ausgebildet ist.

## Claims

1. Self-locking belt reeling device, in particular for motor vehicles, with a vehicle-sensitive and/or belt strap-sensitive control system for the locking member which in the event of locking prevents further rotation of the reeling shaft, and with a winding spring acting on the reeling shaft, wherein a control device, when the belt strap (12) is unwound, swivels a switching lever (20) into the outer toothing of a control disc (13) of the belt strap- and/or vehicle-sensitive control system of the reeling device and when the belt strap (12) is taken up brings it into a release position for the control disc (13), wherein the control device comprises a gear wheel (18) provided with a control cam (23) which meshes with a gear wheel (16) fixedly connected to the shaft and actuates a rocker arm (17) supported on the housing (11) of the reeling device for the controlling of the switching lever (20), characterised in that the rocker arm (17) is pivotable about the shaft axis and there is disposed at each of its two ends a gear wheel (18, 19) that engages with the gear wheel (16) fixed to the shaft, wherein the gear wheel (16) fixed to the shaft and the gear wheels (18, 19) disposed on the rocker arm (17) each possess a switching cam (22, 23, 24), which cams come into contact with one another in predetermined states of unwinding and initiate a swivelling of the rocker arm (17) as a result of belt tension or spring tension.

2. Reeling device according to claim 1, characterised in that the switching cams (22, 23, 24) of the gear wheels (16, 18, 19) are disposed outside their toothing plane.

3. Reeling device according to claim 1 or 2, characterised in that the engagement of the gear wheel (16) fixedly connected to the shaft with the gear wheels (18, 19) disposed on the rocker arm (17) possesses sufficient play that the gear cover permits movement of the rocker arm (17) supported outside the shaft axis.

4. Reeling device according to one of claims 1 to 3, characterised in that a separate locking arm (21) acted on by the switching lever (20) is provided for engagement with the outer toothing (14) of the control disc (13).

5. Reeling device according to claim 4, characterised in that the locking arm is constructed as a spring arm (21) loaded in its engagement position.

## Revendications

1. Enrouleur de ceinture auto-bloquant, en particulier pour véhicules automobiles, avec un système de commande sensible au véhicule et/ou sensible à la bande de la ceinture, pour l'organe de blocage, qui empêche en cas de blocage la continuation de la rotation de l'arbre d'enroulement de ceinture, et avec un ressort d'enroulement agissant sur l'arbre d'enroulement de ceinture, un dispositif de commande faisant pivoter un levier de manoeuvre (20), lorsque la bande de ceinture (12) est déroulée, pour le faire pénétrer dans la denture extérieure d'un disque de commande (13) du système de commande sensible à la bande de ceinture et/ou au véhicule, de l'enrouleur de ceinture et, lorsque la bande de ceinture (12) est enroulée, se plaçant dans une position de libération pour le disque de commande (13), le dispositif de commande présentant une roue dentée (18) pourvue d'une came de commande (23) et s'engrenant avec une roue dentée (16), assujettie à l'arbre et actionnant un balancier (17) monté sur le boîtier (11) de l'enrouleur de ceinture en vue d'assurer la commande du levier de manoeuvre (20), caractérisé en ce que le balancier (17) est monté pivotant autour de l'axe d'arbre et sur chacune de ses deux extrémités est disposée une roue dentée (18, 19) s'engrenant avec la roue dentée (16) assujettie à l'arbre, la roue dentée (16) assujettie à l'arbre et les roues dentées (18, 19) disposées sur le balancier (17) présentant chacune un bouton de manoeuvre (22, 23, 24) qui, lorsque l'on se trouve dans des états de déroulement prédéterminés, viennent en butée mutuelle et introduisent un pivotement du balancier (17), sous l'effet de la traction de la ceinture, respectivement de la traction du ressort.

2. Enrouleur de ceinture selon la revendication 1, caractérisé en ce que les boutons de manoeuvre (22, 23, 24) des roues dentées (16, 18, 19) sont disposés à l'extérieur de leur plan de denture.

3. Enrouleur de ceinture selon la revendication 1 ou 2, caractérisé en ce que l'engagement de la roue dentée (16), assujettie à l'arbre avec les roues dentées (18, 19) disposées sur le balancier (17), présente un jeu de valeur telle que le recouvrement de denture permet le déplacement du balancier (17) tourillonnant hors de l'axe d'arbre.

4. Enrouleur de ceinture selon l'une des revendications 1 à 3, caractérisé en ce qu'un bras de blocage (21) séparé, sollicité par le levier de manoeuvre (20), est prévu pour s'engager dans la denture extérieure (14) du disque de commande (13).

5. Enrouleur de ceinture selon la revendication 4, caractérisé en ce que le bras de blocage est réalisé sous forme de bras élastique (21) sollicité pour prendre sa position d'engagement.
